# FASCICULE DE BREVET EUROPEEN

(11) **EP 2 684 129 B1**
(45) Date de publication et mention de la délivrance du brevet: **02.05.2018**
(21) Numéro de dépôt: 12715120.7
(22) Date de dépôt: 01.03.2012
(51) Int. Cl.: G06F 11/20

(54) **PROCEDES, DISPOSITIFS ET PROGRAMMES D'ORDINATEUR POUR OPTIMISER LA REPLICATION DE DONNEES DANS DES SYSTEMES INFORMATIQUES**
VERFAHREN, VORRICHTUNGEN UND COMPUTERPROGRAMME ZUR OPTIMIERUNG DER REPLIKATION VON DATEN IN EINEM RECHNERSYSTEM
METHODS, DEVICES, AND COMPUTER PROGRAMS FOR OPTIMIZING THE REPLICATION OF DATA IN A COMPUTER SYSTEM

(30) Priorité: 07.03.2011 FR 1151841
(43) Date de publication de la demande: 15.01.2014
(73) Titulaire: Bull SAS, 78340 Les Clayes-sous-Bois (FR)
(72) Inventeur: MOLLARD, Christian, F-78170 La Celle St Cloud (FR); BOUCHOU, Jean-Louis, F-93110 Rosny-sous-Bois (FR)
(74) Mandataire: Santarelli
(86) Numéro de dépôt international: PCT/FR2012/050431
(87) Numéro de publication internationale: WO 2012/120222

(56) Documents cités:
- EP-A2- 1 587 007
- WO-A2-2005/022321
- US-A- 5 765 173
- US-A1- 2006 212 462
- US-A1- 2009 228 484
- US-A1- 2010 058 013

## Description

La présente invention concerne la transmission et le stockage de données, notamment de données provenant de systèmes informatiques hétérogènes, et plus particulièrement des procédés, dispositifs et programmes d'ordinateur pour optimiser la réplication de données dans des systèmes informatiques, entre une source et un ou plusieurs systèmes destinataires, en particulier entre des systèmes de stockage de masse.

Depuis l'avènement des systèmes informatiques, les systèmes de sauvegarde de données jouent un rôle particulièrement important pour non seulement mémoriser des données traitées ou à traiter mais également pour permettre de les retrouver en cas de perte.

Ainsi, typiquement, un système de traitement de l'information d'une entreprise comprend des systèmes informatiques distribués qui traitent des données, souvent mémorisées de façon locale, et un système central de sauvegarde, utilisé pour mémoriser une copie de données importantes des systèmes informatiques. A ces fins, les systèmes informatiques sont reliés à un réseau de communication auquel est également relié un système de stockage de masse de données. De façon périodique, par exemple toutes les nuits, ou sur commande, des systèmes informatiques transmettent des données au système de stockage de masse pour y être sauvegardées. Ainsi, si un système informatique connaît une défaillance, matérielle ou logicielle, est détruit ou fait l'objet d'une erreur de manipulation de la part d'un utilisateur, il est possible de le reconfigurer ou de le remplacer par un système équivalent.

Parmi les systèmes de stockage de masse, les systèmes de stockage de masse dits de deuxième génération, utilisant notamment des supports magnétiques tels que des bandes ou cartouches magnétiques, sont particulièrement répandus. En effet, ces systèmes de sauvegarde et d'archivage de données disposent de grandes capacités de stockage et leur caractère amovible permet de les faire évoluer aisément. Une cartouche a typiquement une capacité de plusieurs centaines de giga-octets.

Pour faciliter l'accès à des systèmes de stockage de masse indépendamment des systèmes faisant appel à ces derniers, il existe des librairies virtuelles, par exemple les librairies connues sous le nom de VTL (sigle de *Virtual Tape Library* en terminologie anglo-saxonne) qui permettent à des systèmes informatiques hétérogènes d'accéder à un même système de stockage de masse en utilisant, notamment, des fonctions d'écriture et de lecture faisant référence à des numéros de bandes ou de cartouches. En outre, pour optimiser les accès en dépit des performances réelles des supports utilisés, ces librairies parallélisent les fonctions de lecture et d'écriture.

Il est rappelé ici que le stockage de données sur bandes ou cartouches magnétiques est continu. Ainsi, contrairement à un stockage sur disque, il n'est pas nécessaire de mémoriser des données de structure et d'organisation des données stockées. Par ailleurs, les données stockées sont indépendantes de la structure de ces données dans le système les traitant. En effet, les données stockées dans les systèmes de sauvegarde comprennent les données utiles ainsi que les données de structure utilisées, par exemple, par un système de fichiers.

Par ailleurs, lorsque des données sont considérées comme essentielles ou vitales, par exemple des données comptables d'une entreprise, elles sont non seulement sauvegardées mais la sauvegarde est répliquée (ou dupliquée). Généralement, les données sont répliquées dans un dispositif distant du dispositif de sauvegarde. Une telle réplication de données autorise, par exemple, une reprise d'activité rapide en cas de catastrophe.

Plusieurs solutions de réplication de données existent. Il existe ainsi des configurations dites synchrones selon lesquelles les données devant être sauvegardées dans deux systèmes différents sont simultanément transmises à ces deux systèmes. Il existe également des configurations dites asynchrones selon lesquelles les données devant être sauvegardées dans deux systèmes différents sont transmises à un premier système de sauvegarde qui les adresse lui-même au second système de sauvegarde. Chacune de ces configurations présente des avantages et des inconvénients.

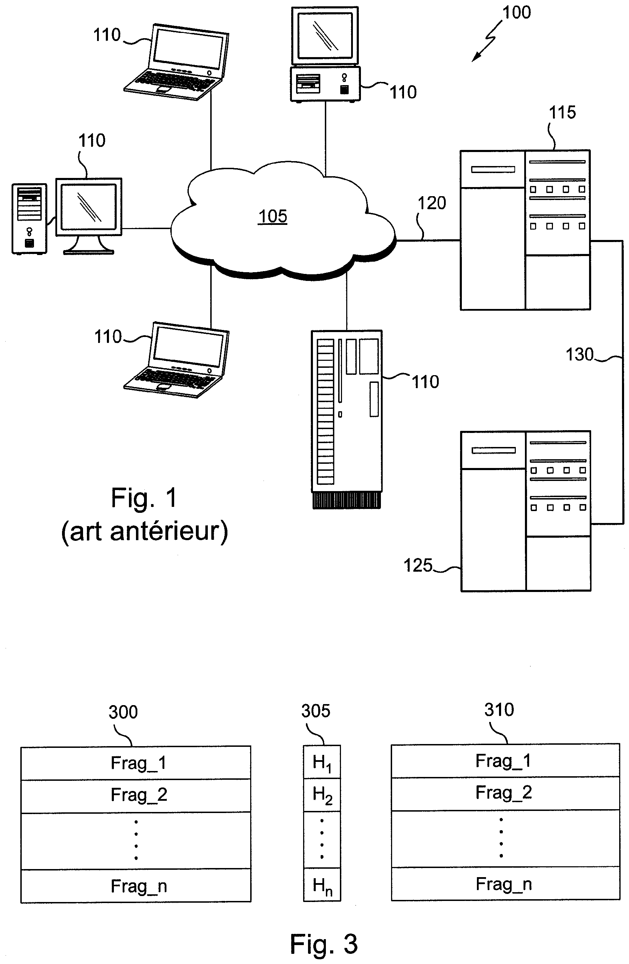

La figure 1 illustre un exemple d'environnement de sauvegarde et de réplication de données, selon une configuration asynchrone.

Comme illustré, l'environnement 100 comprend ici un réseau de communication 105, par exemple un réseau Ethernet, auquel sont connectés des ordinateurs, des micro-ordinateurs et/ou des serveurs, génériquement référencés 110, ou des groupes d'ordinateurs, micro-ordinateurs et/ou serveurs (non représentés), formant des sous-systèmes. Les ordinateurs, micro-ordinateurs et serveurs 110 peuvent constituer des plateformes homogènes ou hétérogènes. Il peut notamment s'agir de plateformes propriétaires, appelées *mainframes* en terminologie anglo-saxonne, par exemple GCOS8 de la société Bull et zOS de la société IBM, ou de plateformes ouvertes, par exemple Unix et Linux (GCOS8, zOS, Unix et Linux sont des marques).

Un système de stockage de masse 115 est également connecté au réseau de communication 105, ici via un lien de communication 120, de préférence un lien ayant une large bande passante et un haut débit, par exemple un lien de type *Fiber Channel.* Le système de stockage de masse 115 constitue un système de sauvegarde des données générées, manipulées et/ou traitées par les ordinateurs, micro-ordinateurs et serveurs 110.

Les plateformes basées sur les ordinateurs, micro-ordinateurs et serveurs 110 peuvent, par exemple, exécuter des applications logicielles de sauvegarde telles que GCOS8/TMS, Bull OpenSave, Symantec NetBackup, EMC Networker ou autres applications logicielles similaires permettant de sauvegarder des données en les transmettant au système de stockage de masse 115. Ces plateformes mettent alors également généralement en oeuvre des applications de gestion de bandes magnétiques telles que CA-TLMS (sigle de *Computer Associate Tape Library Management System* en terminologie anglo-saxonne).

Le système de stockage de masse 115 est en outre connecté à un second système de stockage de masse 125 afin de répliquer des données sauvegardées dans le système de stockage de masse 115. Les systèmes de stockage de masse 115 et 125 sont ici connectés l'un à l'autre via le lien de communication 130. Ce dernier peut être un lien spécifique ou être un lien établi à travers un réseau de communication tel qu'Internet.

Il est observé que, selon la configuration de l'environnement 100, toutes les données stockées dans le système de stockage de masse 115 peuvent être répliquées dans le système de stockage de masse 125 ou non. Ainsi, seules certaines données stockées dans le système de stockage de masse 115, typiquement les données considérées comme les plus importantes, peuvent être répliquées dans le système de stockage de masse 125. Les données devant être répliquées dans le système de stockage de masse 125 sont, par exemple, identifiées dans le système de stockage de masse 115 selon leur type et/ou leur provenance (plateforme d'origine).

Pour optimiser la sauvegarde de données, plusieurs solutions peuvent être envisagées. En particulier, pour réduire le volume des données devant être stockées, une optimisation consiste à compresser ces données et/ou à effectuer une opération de déduplication. De façon générale, la compression de données consiste à recoder les données pour réduire leur taille tandis que la déduplication de données consiste à ne coder que des données différentes et utiliser des pointeurs permettant, lorsque des données sont communes à plusieurs ensembles de données, de les sauvegarder de façon mutualisée. Ces techniques peuvent être mises en oeuvre du côté du système de stockage de masse utilisé pour la sauvegarde et/ou du côté du système de stockage de masse utilisé pour la réplication.

Elles peuvent également être utilisées dans le cadre de la réplication afin d'optimiser l'utilisation de la bande passante requise pour l'échange de données entre deux systèmes de stockage de masse. US2010058013 décrit un système de sauvegarde en ligne. Pour chaque segment dans la sauvegarde, une signature est envoyée à la destination de sauvegarde pour déterminer si le segment est déjà mémorisé. Si ce n'est pas le cas, le segment avec sa signature sont envoyés à la destination de sauvegarde.

EP1587007 décrit un procédé de mise à jour d'objets dans un réseau à bande passante limitée. L'objet est divisé en segments et aussi bien la source que la destination calculent les signatures des segments. La source envoie sa liste de signatures à la destination, la destination compare les signatures et demande la transmission des segments pour lesquels les signatures ne sont pas les mêmes. Cependant, si ces solutions sont globalement efficaces, elles sont souvent complexes à mettre en oeuvre et nécessitent généralement des ressources de traitement importantes. En outre, concernant les solutions basées sur la déduplication de données, il est observé que la perte de données peut s'avérer catastrophique, notamment si ces données sont communes à plusieurs ensembles de données. Ainsi, même si la déduplication de données s'avère souvent efficace, il est fréquemment décidé de ne pas l'utiliser.

L'invention permet de résoudre au moins un des problèmes exposés précédemment.

L'invention a ainsi pour objet un procédé pour ordinateur de réplication d'au moins une donnée sous forme d'au moins un fragment entre un système source et au moins un système destination, ledit système source et ledit au moins un système destination étant reliés l'un à l'autre par un lien de communication, ce procédé, mis en oeuvre dans ledit système source, comprenant les étapes suivantes,
- calcul d'une signature dudit au moins un fragment de ladite au moins une donnée à répliquer ;
- transmission, dans un fichier, de ladite signature audit au moins un système destination ; et,
- si, en réponse à ladite étape de transmission, un message comprenant, dans un fichier, ladite signature et indiquant que ladite au moins une signature est inconnue est reçu, transmission dudit au moins un fragment audit au moins un système destination de telle sorte que ledit fragment n'est transmis audit au moins un système destination que si ladite signature est considérée inconnue.

Le procédé selon l'invention permet ainsi d'initier une réplication différentielle en ne transmettant que des données n'étant pas à la disposition du système destination, le mécanisme de vérification de la disponibilité de données dans le système destination étant simple et efficace. En outre, le procédé selon l'invention permet de garder des optimisations de performance existantes liées, par exemple, à l'utilisation de librairie de type VTL.

Selon un mode de réalisation particulier, le procédé comprend en outre une étape de transmission d'une information de position et/ou de taille dudit au moins un fragment de ladite au moins une donnée à répliquer, ladite information de position et/ou de taille étant transmise avec ladite signature. Le procédé selon l'invention fournit ainsi des informations pour optimiser la reconstruction, dans un système destination, de données à répliquer.

Le procédé comprend en outre, de préférence, une étape de mémorisation dudit au moins un fragment et de ladite signature calculée associée. Il est ainsi possible, à partir d'une signature ou d'une donnée identifiant une signature, de retrouver facilement et rapidement le fragment correspondant afin d'être en mesure de le transmettre à un système destination n'étant pas en possession de celui-ci.

Selon un mode de réalisation particulier, le procédé comprend en outre une étape de décomposition de ladite au moins une donnée à répliquer en une pluralité de fragments comprenant ledit au moins un fragment. Le procédé selon l'invention permet ainsi, notamment, d'optimiser la réplication différentielle en ajustant la taille des fragments. La taille peut être ajustée afin d'être suffisamment petite pour que la probabilité qu'un fragment soit disponible dans un système destination soit importante et suffisamment grosse pour que le nombre de signatures devant être traitées pour répliquer une donnée ne soit pas excessif.

Toujours selon un mode de réalisation particulier, le procédé comprend en outre une étape de filtrage, ladite au moins une donnée à répliquer étant obtenue en réponse à ladite étape de filtrage. Il est ainsi possible d'identifier les données devant être répliquées de celles ne devant pas l'être.

Toujours selon un mode de réalisation particulier, le procédé comprend en outre une étape de détermination d'une indication d'origine de ladite au moins une donnée, ladite indication d'origine étant transmise avec ladite signature. Le procédé selon l'invention permet ainsi de réduire un risque de collision entre des fragments différents qui partageraient une même signature.

L'invention a également pour objet un procédé pour ordinateur de réplication d'au moins une donnée sous forme d'au moins un fragment entre un système source et au moins un système destination, ledit système source et ledit au moins un système destination étant reliés l'un à l'autre par un lien de communication, ce procédé, mis en oeuvre dans ledit au moins un système destination, comprenant les étapes suivantes,
- réception, dans un fichier, d'au moins une signature dudit système source ;
- si au moins une signature a été préalablement mémorisée, ladite au moins une signature préalablement mémorisée étant associée à un fragment préalablement mémorisé, comparaison de ladite au moins une signature reçue avec ladite au moins une signature préalablement mémorisée ;
- si une signature de ladite au moins une signature reçue n'a pas été préalablement mémorisée,
   ∘ transmission d'un message comprenant, dans un fichier, ladite signature et indiquant que ladite signature est inconnue et,
   ∘ réception dudit système source d'un fragment correspondant à ladite signature ; et,
- si une signature de ladite au moins une signature reçue est identique à ladite au moins une signature préalablement mémorisée, reconstruction, au moins partielle, de ladite au moins une donnée à répliquer à partir d'un fragment associé à ladite au moins une signature préalablement mémorisée identique à ladite signature de ladite au moins une signature reçue.

Le procédé selon l'invention permet ainsi d'effectuer une réplication différentielle en utilisant des fragments de données disponibles dans le système destination, le mécanisme de vérification de la disponibilité de données dans le système destination étant simple et efficace. En outre, le procédé selon l'invention permet de garder des optimisations de performance existantes liées, par exemple, à l'utilisation de librairie de type VTL. Par ailleurs, le procédé est sécurisé en ce qu'il est possible de reconstruire des données à répliquer de telle sorte qu'après la réplication les données répliquées soient directement accessibles. En outre, la durée de réplication de données selon le procédé décrit précédemment est peu dépendante du temps de latence entre un système source et un système destination.

De façon avantageuse, le procédé comprend en outre, si une signature de ladite au moins une signature reçue n'a pas été préalablement mémorisée, les étapes suivantes,
- mémorisation dudit fragment reçu et d'une signature correspondante ;
- reconstruction, au moins partielle, de ladite au moins une donnée à répliquer à partir dudit au moins un fragment reçu.

Le procédé selon l'invention permet ainsi d'effectuer une réplication différentielle en ne recevant que des données n'étant pas à la disposition du système destination.

Selon un mode de réalisation particulier, le procédé comprend en outre une étape de réception d'au moins une information de position et/ou de taille d'un fragment correspondant à une signature de ladite au moins une signature reçue, ladite information de position et/ou de taille étant utilisée pour la reconstruction, au moins partielle, de ladite au moins une donnée à répliquer. Ainsi, il est possible de reconstruire partiellement une donnée à répliquer avec tous les fragments disponibles dans le système destination malgré l'absence d'autres fragments.

Toujours selon un mode de réalisation particulier, le procédé comprend en outre une étape de calcul d'une signature dudit au moins un fragment reçu. Le procédé selon l'invention permet ainsi de vérifier l'intégrité des données reçues.

Avantageusement, une indication d'origine est reçue avec ladite au moins une signature, ladite au moins une signature n'étant comparée qu'avec des signatures préalablement mémorisées associées à une indication d'origine identique à ladite indication d'origine reçue. Le procédé selon l'invention permet ainsi de réduire un risque de collision entre des fragments différents qui partageraient une même signature.

Selon un mode de réalisation particulier, une signature est obtenue à partir d'un fragment en utilisant une fonction de hachage. Le procédé selon l'invention peut ainsi être facilement mis en oeuvre, de façon efficace et fiable, par exemple en utilisant une carte matérielle permettant d'effectuer les calculs requis.

L'invention a également pour objet un programme d'ordinateur comprenant des instructions adaptées à la mise en oeuvre de chacune des étapes du procédé décrit précédemment lorsque ledit programme est exécuté sur un ordinateur ainsi qu'un dispositif comprenant des moyens adaptés à la mise en oeuvre de chacune des étapes du procédé décrit précédemment.

Les avantages du programme d'ordinateur et du dispositif selon l'invention sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre un exemple standard d'environnement de sauvegarde et de réplication de données, selon une configuration asynchrone ;
- la figure 2, comprenant les figures 2a et 2b, illustre certaines étapes d'un exemple d'algorithme selon l'invention pour transmettre des données devant être répliquées entre un système de sauvegarde et un système de réplication ;
- la figure 3 illustre le principe de fragmentation et de reconstruction d'un ensemble de données à répliquer ;
- la figure 4 illustre un exemple de réplication de données dans un système mettant en oeuvre l'invention ; et
- la figure 5 illustre un exemple de dispositif de traitement d'informations adapté à mettre en oeuvre l'invention, notamment les étapes décrites en référence aux figures 2a et 2b.

De façon générale, l'invention vise à minimiser le volume de données échangées entre deux systèmes, par exemple entre deux systèmes de stockage de masse, l'un formant un système source, par exemple un système de sauvegarde ou un système de centralisation de données, et l'autre formant un système destination, par exemple un système de réplication ou de sauvegarde de données. A ces fins, les données reçues par le système source et devant être répliquées sont, le cas échéant, découpées en données unitaires, appelées, dans la suite de la description, des fragments. Une signature est calculée pour chaque fragment devant être transmis au système destination pour reconstruire les données. Ces signatures sont transmises au système destination qui les compare à des signatures précédemment mémorisées en association avec des fragments précédemment reçus et mémorisés. Si toutes les signatures reçues sont présentes dans le système destination, ce dernier peut reconstituer les données devant être répliquées à partir des fragments associés aux signatures présentes selon les signatures reçues.

Dans le cas contraire, si certaines signatures sont absentes du système destination, ce dernier transmet une requête au système source, comprenant ces signatures absentes (ou une donnée d'identification de ces signatures), afin que ce dernier transmette les fragments correspondants. A la réception de ces fragments, le système destination calcule les signatures des fragments reçus, si elles ne sont pas reçues avec les fragments, et reconstitue les données devant être répliquées à partir des fragments associés aux signatures présentes selon les signatures reçues.

L'invention utilise, de préférence, un système de stockage basé sur des librairies de type VTL ou, plus généralement sur des fonctions de réplication de données telles que des fonctions utilisées dans les NAS (sigle de *Network Attached Storage* en terminologie anglo-saxonne) ou des fonctions de réplication de blocs de données, selon lesquelles des emplacements virtuels ou physiques de mémorisation sont utilisés, les données étant mémorisées de façon ordonnée à chacun de ces emplacements.

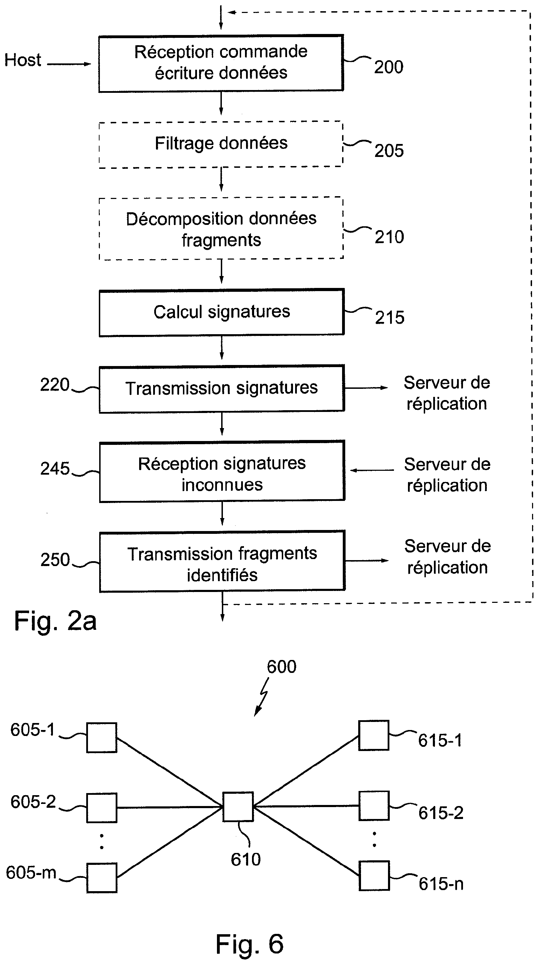

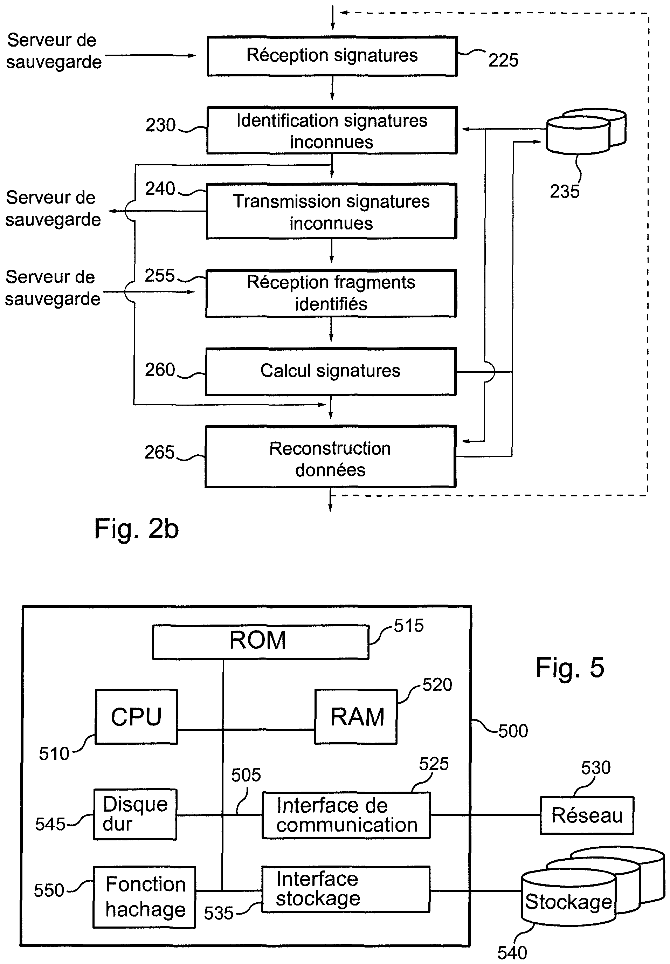

La figure 2, comprenant les figures 2a et 2b, illustre certaines étapes d'un exemple d'algorithme selon l'invention pour transmettre des données devant être répliquées entre un système source, ici un système de sauvegarde appelé serveur de sauvegarde, et un système destination, ici un système de réplication, appelé serveur de réplication. La figure 2a est relative aux étapes mises en oeuvre dans le serveur de sauvegarde, par exemple le système de stockage de masse 115 de la figure 1, tandis que la figure 2b est relative aux étapes mises en oeuvre dans le serveur de réplication, par exemple le système de stockage de masse 125 de la figure 1.

Comme illustré sur la figure 2a, une première étape consiste à recevoir une commande d'écriture comprenant une référence d'emplacement virtuel de mémorisation, typiquement une référence de cartouche virtuelle, ainsi que les données devant être sauvegardées (étape 200). La commande et les données associées sont typiquement reçues d'un système informatique, généralement appelé *host,* tel qu'un micro-ordinateur, ordinateur ou serveur 110 représenté sur la figure 1.

Dans une étape suivante (étape 205) les données peuvent être filtrées. En effet, si toutes les données reçues pour être sauvegardées le sont, elles ne sont pas nécessairement toutes répliquées. Le filtrage est avantageusement basé sur un critère d'essentialité associé aux données, ce critère pouvant notamment être déterminé par rapport à la provenance des données (type de *host*) ou à leur nature.

Les données devant être répliquées sont alors, le cas échéant, décomposées en fragments (étape 210), de préférence ordonnés. Un fragment est ici une suite d'octets des données à transmettre, par exemple une suite de 256 kilo-octets.

Comme indiqué par l'utilisation de trait pointillé, les étapes 205 et 210 sont optionnelles.

Une signature est alors calculée pour chaque fragment des données devant être répliquées (étape 215). Ces signatures sont, de préférence, calculées à l'aide de fonctions de hachage cryptographique (les signatures sont alors généralement appelées *hcodes* en terminologie anglo-saxonne) ou plus généralement de toutes méthodes de calcul de signatures permettant d'identifier des données de façon fiable, c'est-à-dire avec un risque de collision faible. A titre d'illustration, les fonctions connues sous les noms de SHA160, SH256 (SHA étant le sigle de *Secure Hash Algorithm* en terminologie anglo-saxonne) et MD5 (MD étant le sigle de *Message Digest* en terminologie anglo-saxonne) peuvent être utilisées. Comme décrit ci-après, les signatures sont avantageusement calculées à l'aide de fonctions matérielles. Chaque signature a, par exemple, une taille de 256 bits.

Les signatures obtenues sont ensuite transmises (étape 220) au serveur de réplication (système de stockage de masse utilisé pour la réplication). Selon un mode de réalisation particulier, les signatures sont transmises sous forme de fichiers. Un tel mode de réalisation offre l'avantage d'être indépendant du protocole de transmission utilisé.

Des informations de position et, de préférence, de taille sont avantageusement transmises avec les signatures pour déterminer des emplacements auxquels les fragments doivent être mémorisés. Comme décrit ci-après, de telles informations permettent, le cas échéant, d'optimiser la reconstruction de données à répliquer.

Par ailleurs, une référence d'emplacement de mémorisation est avantageusement transmise avec les signatures pour déterminer l'emplacement auquel les données dupliquées doivent être mémorisées. Il peut s'agir, par exemple, d'un identifiant de bande magnétique virtuelle.

Les fragments et les signatures correspondantes sont avantageusement temporairement mémorisés par le serveur de sauvegarde afin de permettre, ultérieurement, de retrouver un fragment selon une signature donnée.

Comme illustré sur la figure 2b, le serveur de réplication reçoit ces signatures (étape 225) du serveur de sauvegarde (système de stockage de masse utilisé pour la sauvegarde). Comme indiqué précédemment ces signatures sont, de préférence, reçues sous forme de fichiers. Elles peuvent être mémorisées temporairement pour permettre la reconstruction des données correspondantes.

Dans une étape suivante (étape 230), ces signatures sont analysées pour déterminer si les fragments correspondants sont connus du serveur de réplication afin d'identifier des signatures inconnues. A ces fins, les signatures reçues sont comparées à des signatures précédemment reçues ou calculées à partir de fragments reçus et mémorisées avec ces derniers dans un système de stockage 235 du serveur de réplication. Selon un mode de réalisation particulier, une copie des signatures peut être mémorisée dans une mémoire tampon, de préférence permanente, par exemple une mémoire de type SSD (sigle de *Solid-State Drive* en terminologie anglo-saxonne), afin d'accélérer cette étape de comparaison. Toutes les signatures reçues à l'étape 225 et n'ayant pas été préalablement mémorisées par le serveur de réplication sont considérées comme étant des signatures inconnues.

La liste des signatures inconnues, ou d'informations permettant d'identifier les fragments manquants dans le serveur de réplication (par exemple la position des signatures inconnues dans la séquence de signatures reçues à l'étape 225), est transmise au serveur de sauvegarde (étape 240). A nouveau, la liste des signatures inconnues est, de préférence, transmise sous forme de fichiers offrant l'avantage de l'indépendance du protocole de transmission utilisé.

Dans un souci de clarté, les signatures inconnues, transmises par le serveur de réplication et reçues par le serveur de sauvegarde, visent, dans la suite de la description, des signatures en tant que telles ou des informations permettant d'identifier les fragments manquants dans le serveur de réplication ou des données d'identification de signatures ou de fragments correspondants.

Il est observé ici que lorsque toutes les signatures reçues du serveur de sauvegarde sont présentes dans le serveur de réplication (et associées avec des fragments) et, avantageusement, lorsque la donnée à répliquer est reconstruite, ce dernier adresse, de préférence, un message au serveur de sauvegarde pour le lui signaler (notamment afin qu'il libère la mémoire contenant la liste des signatures transmises et des fragments correspondants).

Comme illustré sur la figure 2a, le serveur de sauvegarde reçoit cette liste de signatures inconnues du serveur de réplication (étape 245). Le serveur de sauvegarde identifie alors les fragments correspondant aux signatures reçues du serveur de réplication et considérées par ce dernier comme inconnues. Comme indiqué précédemment, les fragments et les signatures correspondantes sont temporairement mémorisés par le serveur de sauvegarde, il est donc possible, à partir de signatures, de retrouver les fragments correspondants. Les fragments identifiés sont transmis au serveur de réplication (étape 250).

Comme illustré sur la figure 2b, après avoir reçu des fragments du serveur de sauvegarde (étape 255), le serveur de réplication calcule une signature pour chaque fragment reçu (étape 260). Le ou les algorithmes utilisés pour calculer les signatures des fragments sont identiques à ceux utilisés dans le serveur de sauvegarde de telle sorte que, pour un fragment donné, la signature calculée dans le serveur de sauvegarde soit égale à la signature calculée dans le serveur de réplication.

Alternativement, les signatures peuvent être reçues avec les fragments. Cependant, le fait de les recalculer permet d'optimiser la bande passante entre les serveurs de sauvegarde et de réplication et de vérifier les fragments reçus.

Les fragments reçus du serveur de sauvegarde et les signatures correspondantes calculées sont mémorisées dans le système de stockage 235 du serveur de réplication pour reconstruire les données à répliquer. Le cas échéant, les signatures calculées sont également mémorisées dans une mémoire tampon comme décrit précédemment.

Parallèlement, les signatures initialement reçues (à l'étape 225) et non considérées comme inconnues (à l'étape 230) sont utilisées pour reconstruire, dans le système de stockage 235 du serveur de réplication, les données à répliquer.

Comme suggéré par les flèches en trait pointillé le processus peut être répété pour la réplication d'autres données.

Il est observé ici que les fragments composant des données à répliquer sont avantageusement ordonnés. Par conséquent, la reconstruction de ces données est réalisée de façon séquentielle, en tenant compte de la disponibilité des fragments correspondants aux signatures reçues, selon leur ordre. Alternativement, si les fragments ne sont pas ordonnés, des informations d'ordonnancement leur sont associées pour permettre de reconstituer leur ordonnancement.

La figure 3 illustre le principe général de fragmentation et de reconstruction d'un ensemble de données à répliquer. La référence 300 vise ici un ensemble de données à répliquer. Ces dernières se décomposant en fragments, chaque fragment étant représenté par une ligne et référencé *Frag_i.* La référence 305 vise les signatures, une signature (*Hᵢ*) étant associée à chaque fragment (*Frag_i*) des données à répliquer. La référence 310 représente la reconstruction des données à répliquer.

Comme décrit précédemment, une première étape de transmission entre le serveur de sauvegarde et le serveur de réplication consiste à transmettre l'ensemble des signatures *Hᵢ*. Pour reconstruire les données 310, le serveur de réplication détermine si le fragment correspondant à la signature *H₁* est disponible dans son système de stockage. Dans l'affirmative, la reconstruction des données commence en accédant au fragment *Frag_1* dans son système de stockage. Dans le cas contraire, la signature est considérée comme inconnue et est transmise au serveur de sauvegarde avec l'ensemble des signatures inconnues. La reconstruction des données 310 ne peut alors pas commencer avant la réception du fragment *Frag_1.*

De même, s'il est possible de commencer la reconstruction des données 310 avec le fragment *Frag_1,* le serveur de réplication détermine si le fragment correspondant à la signature suivante, ici *H₂*, est disponible dans son système de stockage. Dans l'affirmative, la reconstruction des données continue en accédant au fragment *Frag_2* dans son système de stockage. Dans le cas contraire, la signature est considérée comme inconnue et est transmise au serveur de sauvegarde avec l'ensemble des signatures inconnues. La reconstruction des données 310 ne peut alors pas se poursuivre avant la réception du fragment *Frag_2.*

Le procédé se poursuit ainsi jusqu'au dernier fragment, ici le fragment *Frag_n* associé à la signature *Hₙ*.

De façon avantageuse, des informations de position et, de préférence, de taille sont transmises avec les signatures, par le serveur de sauvegarde au serveur de réplication, pour permettre à ce dernier de reconstruire des données non contigües sans attendre des fragments manquants du serveur de sauvegarde. Il est observé que des informations de taille peuvent être inutiles si, par exemple, la taille des fragments est constante et prédéterminée.

Ainsi, en reprenant l'exemple précédent, si le serveur de réplication connaît les fragments *Frag_1* et *Frag_3*, placés respectivement avant et après le fragment *Frag_2,* il peut reconstruire la partie de donnée à répliquer comprenant les fragments *Frag_1* et *Frag_3* s'il connaît la taille du fragment *Frag_2* (en supposant que le serveur de réplication ne connaisse pas le fragment *Frag_2*). Il est observé que la position du fragment *Frag_2* est ici implicitement donnée par la séquence *Frag_1, Frag_2* et *Frag_3.*

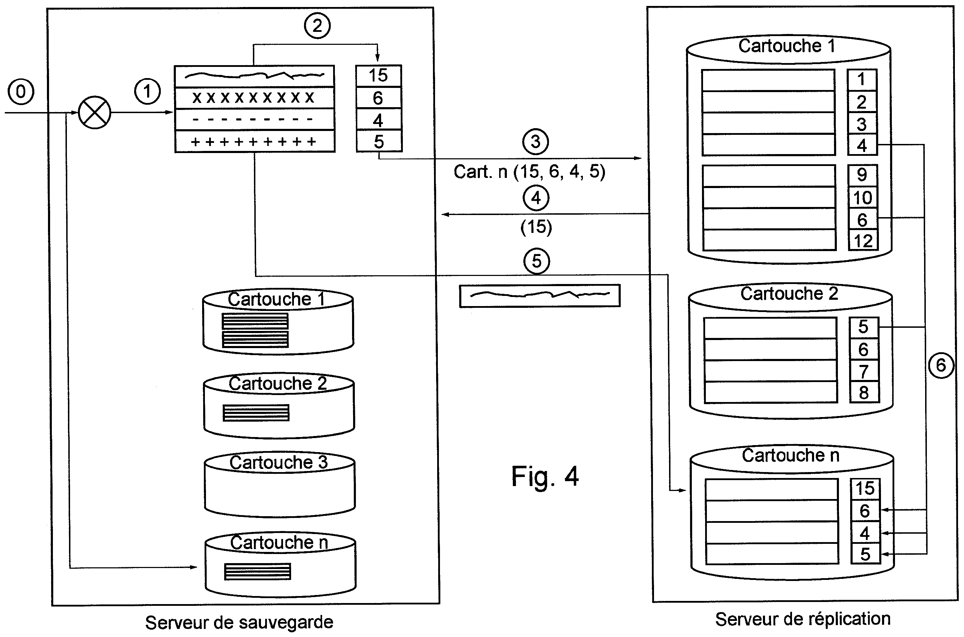

La figure 4 illustre un exemple de réplication de données dans un système mettant en oeuvre l'invention. Plus précisément, la figure 4 représente de façon simplifiée le transfert d'un ensemble de fragments entre un serveur de sauvegarde, par exemple le système de stockage de masse 115 de la figure 1, et un serveur de réplication, par exemple le système de stockage de masse 125 de la figure 1.

Des données reçues (étape ⓪) par le serveur de sauvegarde sont sauvegardées et, si elles doivent être répliquées, c'est-à-dire transmises au serveur de réplication, sont mémorisées sous forme d'une table ordonnée de fragments (étape ①). Lors de la mémorisation de chaque fragment, une signature est calculée (étape ②). Les signatures sont, de préférence, mémorisées dans la table, en lien avec les fragments correspondant. Les signatures sont avantageusement calculées de façon matérielle, de préférence à l'aide d'une fonction de hachage cryptographique, en utilisant, par exemple, une carte ayant la référence *Express DX* produite par la société EXAR Corporation. Selon l'exemple présenté sur la figure 4, quatre fragments sont mémorisés, les signatures associées à ces fragments étant les valeurs 15, 6, 4 et 5.

Il est observé ici que si la notion de réplication n'est pas connue lors de la réception de données, dans le système de sauvegarde, il existe deux possibilités de traitement des données en vue d'une éventuelle réplication. Dans une première configuration, toutes les signatures sont calculées pour toutes les données reçues. Dans une seconde configuration, seules les signatures nécessaires sont calculées lorsque la réplication est initiée.

Par ailleurs, si l'exemple décrit en référence à la figure 3 vise la reconstruction de données à répliquer par l'agencement de fragments, une reconstruction partielle de données peut également consister en la mémorisation de séquences de signatures (ou d'identifiants de signatures) permettant une reconstruction finale ultérieure des données à répliquer à partir de ces séquences, en utilisant des liens établies entre les signatures et des fragments.

Ces signatures calculées sont alors transmises au serveur de réplication (étape ③) avec une référence d'emplacement virtuel de mémorisation (*Cart_n,* pour cartouche *n*). Lorsque le serveur de réplication reçoit ces signatures, il les compare à des signatures qu'il a, le cas échéant, préalablement calculées sur des fragments reçus et mémorisés. Ici, les moyens de stockage du serveur de réplication comprennent des réplications de deux cartouches virtuelles, l'une (*cartouche 1*) comprenant des fragments ayant pour signatures les valeurs 1, 2, 3, 4, 9, 10, 6 et 12 et l'autre (*cartouche 2*) comprenant des fragments ayant pour signatures les valeurs 5, 6, 7 et 8. Ainsi, lorsque le serveur de réplication compare les valeurs des signatures reçues (15, 6, 4 et 5) avec les valeurs des signatures mémorisées (1, 2, 3, 4, 9, 10, 6, 12, 5, 7 et 8), il en conclu que seul le fragment correspondant à la signature 15 est inconnu.

Le serveur de réplication adresse alors un message (réponse à la requête du serveur de sauvegarde) comprenant la valeur 15 (valeur de la signature inconnue), ou une information permettant d'identifier le fragment correspondant à cette signature, au serveur de sauvegarde (étape ④). Il est observé ici que la signature ayant la valeur 15 correspond au premier fragment des données à répliquer. Par conséquent, si le serveur de réplication ne connaît pas la position et la taille du fragment correspondant à la signature 15, il ne peut pas commencer à reconstruire les données à répliquer tant qu'il n'est pas en possession du fragment correspondant à la signature ayant la valeur 15.

Lorsque le serveur de sauvegarde reçoit du serveur de réplication le message comprenant la valeur 15, il retrouve le fragment correspondant à cette signature (dans la table ordonnée des fragments) et le transmet au serveur de réplication (étape ⑤).

A la réception de ce fragment, s'il est reçu sans sa signature, le serveur de réplication calcule la signature correspondante (les signatures calculées par le serveur de réplication le sont avec les mêmes algorithmes que ceux utilisés dans le serveur de sauvegarde). Comme le serveur de sauvegarde, le serveur de réplication utilise, de préférence, une fonction matérielle pour calculer les signatures, par exemple, une carte *Express DX* de la société EXAR Corporation.

Le serveur de réplication peut alors commencer à reconstruire les données à répliquer en utilisant ce fragment.

Il peut ensuite poursuivre la reconstruction des données à répliquer en utilisant des fragments préalablement reçus (étape ⑥), notamment, ici, les fragments correspondant aux signatures 6, 4 et 5 (mémorisées de façon temporaire, le temps de la reconstruction des données correspondantes).

Lors de la reconstruction de données, les signatures sont mémorisées en lien avec les fragments pour permettre leur réutilisation, le cas échéant, lors de la réplication ultérieure de données.

Il est observé ici que le calcul de signatures, dans le système source, peut être réalisé avant ou après que la décision de répliquer une donnée reçue, à sauvegarder, soit prise. Si la décision de répliquer une donnée doit être prise à partir d'un fragment et d'une signature, une information supplémentaire liée à l'origine du fragment est, de préférence, associée au fragment. Ainsi, connaissant l'origine du fragment (par exemple une référence du système à l'origine du fragment), il peut être décidé de le répliquer ou non.

Une telle information d'origine peut également être utilisée pour limiter les risques de collision liés à l'utilisation de signatures. A ces fins, une indication d'origine est transmise par le serveur de sauvegarde au serveur de réplication avec un ensemble de signatures. A la réception de ces informations, le serveur de réplication ne compare les signatures reçues qu'avec des signatures préalablement mémorisées, associées à la même origine que celle reçue. Ainsi, lorsque la signature d'un fragment est mémorisée dans un système destination, elle est mémorisée avec l'origine du fragment et associée au fragment reçu.

Alors que selon les modes de réalisation décrits précédemment, les signatures utilisées dans le serveur de réplication sont de préférence calculées par ce dernier à partir de fragments reçus du serveur de sauvegarde, il est possible de transmettre, avec les fragments correspondants, les signatures calculées par le serveur de sauvegarde en réponse à un message comprenant les signatures inconnues. Les fragments et les signatures reçus par le serveur de réplication sont alors mémorisés par ce dernier pour permettre la reconstruction ultérieure de données à répliquer.

La figure 5 illustre un exemple de dispositif de traitement d'informations pouvant être utilisé pour mettre en oeuvre, au moins partiellement, l'invention, notamment les étapes décrites en référence aux figures 2a et 2b, c'est-à-dire un dispositif pouvant être utilisé en conjonction avec un système de stockage de masse utilisé pour la sauvegarde et/ou la réplication de données. Le dispositif 500 est par exemple un micro-ordinateur ou un ordinateur.

Le dispositif 500 comporte de préférence un bus de communication 505 auquel sont reliés :
- une unité centrale de traitement ou microprocesseur 510 (CPU, sigle de *Central Processing Unit* en terminologie anglo-saxonne) ;
- une mémoire morte 515 (ROM, acronyme de *Read Only Memory* en terminologie anglo-saxonne) pouvant comporter un système d'exploitation et des programmes tels que "Prog" ;
- une mémoire vive ou mémoire cache 520 (RAM, acronyme de *Random Access Memory* en terminologie anglo-saxonne) comportant des registres adaptés à enregistrer des variables et paramètres créés et modifiés au cours de l'exécution des programmes précités ;
- une interface de communication 525 reliée à un réseau de communication distribué 530, par exemple le réseau Internet, l'interface étant apte à transmettre et à recevoir des données ; et,
- une interface de stockage de masse 535 reliée à un ensemble de disques durs, système de bandes ou cartouches magnétiques, ou dispositifs de stockage de masse équivalents 540 permettant de stocker des données sauvegardées ou répliquées.

Le dispositif 500 dispose en outre, de préférence, d'un disque dur 545 pouvant comporter les programmes "Prog" précités et des données traitées ou à traiter selon l'invention ainsi que d'un module de calcul de signatures 550 capable de mettre en oeuvre, par exemple, une fonction de hachage cryptographique. Un tel module peut notamment consister en une carte, par exemple une carte au format PCI (sigle de *Peripheral Component Interconnect* en terminologie anglo-saxonne), telle qu'une carte Express DX de EXAR Corporation. Le dispositif 500 peut en outre comporter un lecteur de cartes mémoires (non représenté) adapté à y lire ou à y écrire des données traitées ou à traiter selon l'invention.

Le bus de communication 505 permet la communication et l'interopérabilité entre les différents éléments inclus dans le dispositif 500 ou reliés à lui. La représentation du bus n'est pas limitative et, notamment, l'unité centrale est susceptible de communiquer des instructions à tout élément du dispositif 500 directement ou par l'intermédiaire d'un autre élément du dispositif 500.

Le code exécutable de chaque programme permettant à l'appareil programmable de mettre en oeuvre les processus selon l'invention, peut être stocké, par exemple, dans le disque dur 545 ou en mémoire morte 515.

Selon une variante, le code exécutable des programmes pourra être reçu par l'intermédiaire du réseau de communication 530, via l'interface 525, pour être stocké de façon identique à celle décrite précédemment.

De manière plus générale, le ou les programmes pourront être chargés dans un des moyens de stockage du dispositif 500 avant d'être exécutés.

L'unité centrale 510 va commander et diriger l'exécution des instructions ou portions de code logiciel du ou des programmes selon l'invention, instructions qui sont stockées dans le disque dur 545 ou dans la mémoire morte 515 ou bien dans les autres éléments de stockage précités. Lors de la mise sous tension, le ou les programmes qui sont stockés dans une mémoire non volatile, par exemple le disque dur 545 ou la mémoire morte 515, sont transférés dans la mémoire vive 520 qui contient alors le code exécutable du ou des programmes selon l'invention, ainsi que des registres pour mémoriser les variables et paramètres nécessaires à la mise en oeuvre de l'invention.

Les données à sauvegarder ou à répliquer sont transmises aux dispositifs de stockage de masse 540 via l'interface 535 qui peut également être utilisée pour accéder à des données préalablement stockées dans les dispositifs de stockage de masse 540, notamment pour effectuer une restauration d'un système et/ou une reprise d'activité rapide en cas de catastrophe.

Il convient de noter que l'appareil de communication comportant le dispositif selon l'invention peut également être un appareil programmé. Cet appareil contient alors le code du ou des programmes informatiques par exemple figé dans un circuit intégré à application spécifique (ASIC).

Il est observé que si l'invention a été particulièrement décrite en vue d'application de type réplication de données à partir d'un système de sauvegarde, elle peut être utilisée pour d'autres applications, notamment pour des applications de distribution de données vers plusieurs destinataires et pour des applications de synchronisation de données.

Ainsi, à titre d'illustration, la figure 6 représente un environnement 600 permettant la centralisation de données et leur distribution par duplication. Ces données sont ici reçues de plusieurs systèmes 605-1 à 605-m, par exemple des ordinateurs. Elles sont centralisées dans le système 610, par exemple un serveur, qui les agrège et les distribue aux systèmes 615-1 à 615-n, par exemple des systèmes de stockage de masse. A ces fins, le système 610 met en oeuvre un algorithme similaire à celui décrit en référence à la figure 2a tandis que chacun des systèmes 615-1 à 615-n met en oeuvre un algorithme similaire à celui décrit en référence à la figure 2b. Il est observé que les signatures transmises par le système 610 sont adressées à l'ensemble des systèmes 615-1 à 615-n tandis que des fragments sont transmis à ces systèmes, de façon spécifique, selon les signatures considérées comme inconnues reçues de ces derniers.

Par ailleurs, il est également observé que les signatures et les fragments échangés entre les systèmes sources et destinations peuvent être transformés, notamment codés ou compressés, en particulier pour optimiser leur taille, à l'aide d'algorithmes standard. Il convient de noter ici que si des données sont transformées, par exemple compressées, après le calcul de signatures dans le système de sauvegarde, la transformation inverse doit être effectuée dans le système de réplication s'il est nécessaire de recalculer des signatures dans ce dernier.

Naturellement, pour satisfaire des besoins spécifiques, une personne compétente dans le domaine de l'invention pourra appliquer des modifications dans la description précédente.

## Revendications

1. Procédé pour ordinateur de réplication d'au moins une donnée sous forme d'au moins un fragment entre un système source et au moins un système destination, ledit système source et ledit au moins un système destination étant reliés l'un à l'autre par un lien de communication, ce procédé, mis en oeuvre dans ledit système source, étant **caractérisé en ce qu'**il comprend les étapes suivantes,
- calcul (215) d'une signature dudit au moins un fragment de ladite au moins une donnée à répliquer ;
- transmission (220), dans un fichier, de ladite signature audit au moins un système destination ; et,
- si, en réponse à ladite étape de transmission, un message comprenant, dans un fichier, ladite signature et indiquant que ladite au moins une signature est inconnue est reçu (245), transmission (250) dudit au moins un fragment audit au moins un système destination de telle sorte que ledit fragment n'est transmis audit au moins un système destination que si ladite signature est considérée inconnue.

2. Procédé selon la revendication 1 comprenant en outre une étape de transmission d'une information de position et/ou de taille dudit au moins un fragment de ladite au moins une donnée à répliquer, ladite information de position et/ou de taille étant transmise avec ladite signature.

3. Procédé selon la revendication 1 ou la revendication 2 comprenant en outre une étape de mémorisation dudit au moins un fragment et de ladite signature calculée associée.

4. Procédé selon l'une quelconque des revendications 1 à 3 comprenant en outre une étape de décomposition (210) de ladite au moins une donnée à répliquer en une pluralité de fragments comprenant ledit au moins un fragment.

5. Procédé selon l'une quelconque des revendications 1 à 4 comprenant en outre une étape de filtrage (205), ladite au moins une donnée à répliquer étant obtenue en réponse à ladite étape de filtrage.

6. Procédé selon l'une quelconque des revendications 1 à 5 comprenant en outre une étape de détermination d'une indication d'origine de ladite au moins une donnée, ladite indication d'origine étant transmise avec ladite signature.

7. Procédé pour ordinateur de réplication d'au moins une donnée sous forme d'au moins un fragment entre un système source et au moins un système destination, ledit système source et ledit au moins un système destination étant reliés l'un à l'autre par un lien de communication, ce procédé, mis en oeuvre dans ledit au moins un système destination, étant **caractérisé en ce qu'**il comprend les étapes suivantes,
- réception (225), dans un fichier, d'au moins une signature dudit système source ;
- si au moins une signature a été préalablement mémorisée, ladite au moins une signature préalablement mémorisée étant associée à un fragment préalablement mémorisé, comparaison (230) de ladite au moins une signature reçue avec ladite au moins une signature préalablement mémorisée ;
- si une signature de ladite au moins une signature reçue n'a pas été préalablement mémorisée,
∘ transmission d'un message comprenant, dans un fichier, ladite signature et indiquant que ladite signature est inconnue et,
∘ réception dudit système source d'un fragment correspondant à ladite signature ; et
- si une signature de ladite au moins une signature reçue est identique à ladite au moins une signature préalablement mémorisée, reconstruction (265), au moins partielle, de ladite au moins une donnée à répliquer à partir d'un fragment associé à ladite au moins une signature préalablement mémorisée identique à ladite signature de ladite au moins une signature reçue.

8. Procédé selon la revendication 7 comprenant en outre, si une signature de ladite au moins une signature reçue n'a pas été préalablement mémorisée, les étapes suivantes,
- mémorisation dudit fragment reçu et d'une signature correspondante ;
- reconstruction (265), au moins partielle, de ladite au moins une donnée à répliquer à partir dudit au moins un fragment reçu.

9. Procédé selon la revendication 8 comprenant en outre une étape de réception d'au moins une information de position et/ou de taille d'un fragment correspondant à une signature de ladite au moins une signature reçue, ladite information de position et/ou de taille étant utilisée pour la reconstruction, au moins partielle, de ladite au moins une donnée à répliquer.

10. Procédé selon l'une quelconque des revendications 7 à 9 comprenant en outre une étape de calcul (260) d'une signature dudit au moins un fragment reçu.

11. Procédé selon l'une quelconque des revendications 7 à 10 selon lequel une indication d'origine est reçue avec ladite au moins une signature, ladite au moins une signature n'étant comparée qu'avec des signatures préalablement mémorisées associées à une indication d'origine identique à ladite indication d'origine reçue.

12. Procédé selon l'une quelconque des revendications précédentes selon lequel une signature est obtenue à partir d'un fragment en utilisant une fonction de hachage.

13. Programme d'ordinateur comprenant des instructions adaptées à la mise en oeuvre de chacune des étapes du procédé selon l'une quelconque des revendications précédentes lorsque ledit programme est exécuté sur un ordinateur.

14. Dispositif comprenant des moyens adaptés à la mise en oeuvre de chacune des étapes du procédé selon l'une quelconque des revendications 1 à 12.

## Patentansprüche

1. Verfahren für Computer zum Replizieren mindestens eines Datums in Form mindestens eines Fragments zwischen einem Quellensystem und mindestens einem Zielsystem, wobei das Quellensystem und das mindestens eine Zielsystem miteinander durch eine Kommunikationsverbindung verbunden sind, wobei das Verfahren, das in dem Quellensystem eingesetzt wird, **dadurch gekennzeichnet ist, dass** es die folgenden Schritte umfasst:
- Berechnung (215) einer Signatur des mindestens einen Fragments des mindestens einen zu replizierenden Datums;
- Übertragung (220) der Signatur in einer Datei an das mindestens eine Zielsystem; und
- falls als Antwort auf den Übertragungsschritt eine Nachricht, die in einer Datei die Signatur umfasst und anzeigt, dass die mindestens eine Signatur unbekannt ist, empfangen wird (245), Übertragung (250) des mindestens einen Fragments an das mindestens eine Zielsystem, so dass das Fragment nur dann an das mindestens eine Zielsystem übertragen wird, wenn die Signatur als unbekannt betrachtet wird.

2. Verfahren nach Anspruch 1, ferner umfassend einen Schritt der Übertragung einer Positions- und/oder Größeninformation des mindestens einen Fragments des mindestens einen zu replizierenden Datums, wobei die Positions- und/oder Größeninformation mit der Signatur übertragen wird.

3. Verfahren nach Anspruch 1 oder Anspruch 2, ferner umfassend einen Schritt der Speicherung des mindestens einen Fragments und der zugehörigen berechneten Signatur.

4. Verfahren nach einem der Ansprüche 1 bis 3, ferner umfassend einen Schritt der Zerlegung (210) des mindestens einen zu replizierenden Datums in eine Vielzahl von Fragmenten, umfassend das mindestens eine Fragment.

5. Verfahren nach einem der Ansprüche 1 bis 4, ferner umfassend einen Filterschritt (205), wobei das mindestens eine zu replizierende Datum als Antwort auf den Filterschritt erhalten wird.

6. Verfahren nach einem der Ansprüche 1 bis 5, ferner umfassend einen Schritt der Bestimmung einer Ursprungsangabe des mindestens einen Datums, wobei die Ursprungsangabe mit der Signatur übertragen wird.

7. Verfahren für Computer zum Replizieren mindestens eines Datums in Form mindestens eines Fragments zwischen einem Quellensystem und mindestens einem Zielsystem, wobei das Quellensystem und das mindestens eine Zielsystem miteinander durch eine Kommunikationsverbindung verbunden sind, wobei das Verfahren, das in dem mindestens einen Zielsystem eingesetzt wird, **dadurch gekennzeichnet ist, dass** es die folgenden Schritte umfasst:
- Empfang (225) mindestens einer Signatur des Quellensystems in einer Datei;
- falls mindestens eine Signatur vorher gespeichert wurde, wobei die mindestens eine vorher gespeicherte Signatur einem vorher gespeicherten Fragment zugeordnet wird, Vergleich (230) der mindestens einen empfangenen Signatur mit mindestens einer vorher gespeicherten Signatur,
- falls eine Signatur der mindestens einen empfangenen Signatur nicht vorher gespeichert wurde,
∘ Übertragung einer Nachricht, die in einer Datei die Signatur umfasst und anzeigt, dass die Signatur unbekannt ist, und
∘ Empfang eines Fragments entsprechend der Signatur von dem Quellensystem; und
- falls eine Signatur der mindestens einen empfangenen Signatur identisch mit der mindestens einen vorher gespeicherten Signatur ist, zumindest teilweise Rekonstruktion (265) des mindestens einen zu replizierenden Datums aus einem Fragment, das der mindestens einen vorher gespeicherten Signatur, die mit der Signatur der mindestens einen empfangenen Signatur identisch ist, zugeordnet ist.

8. Verfahren nach Anspruch 7, ferner umfassend, falls eine Signatur der mindestens einen empfangenen Signatur nicht vorher gespeichert wurde, die folgenden Schritte:
- Speichern des empfangenen Fragments und einer entsprechenden Signatur;
- zumindest teilweise Rekonstruktion (265) des mindestens einen zu replizierenden Datums aus dem mindestens einen empfangenen Fragment.

9. Verfahren nach Anspruch 8, ferner umfassend einen Schritt des Empfangs mindestens einer Positions- und/oder Größeninformation eines Fragments entsprechend einer Signatur der mindestens einen empfangenen Signatur, wobei die Positions- und/oder Größeninformation für die zumindest teilweise Rekonstruktion des mindestens einen zu replizierenden Datums verwendet wird.

10. Verfahren nach einem der Ansprüche 7 bis 9, ferner umfassend einen Schritt der Berechnung (260) einer Signatur des mindestens einen empfangenen Fragments.

11. Verfahren nach einem der Ansprüche 7 bis 10, bei dem eine Ursprungsangabe mit der mindestens einen Signatur empfangen wird, wobei die mindestens eine Signatur nur mit vorher gespeicherten Signaturen, die einer Ursprungsangabe identisch mit der empfangenen Ursprungsangabe zugeordnet sind, verglichen wird.

12. Verfahren nach einem der vorhergehenden Ansprüche, bei dem eine Signatur aus einem Fragment unter Verwendung einer Hash-Funktion erhalten wird.

13. Computerprogramm, umfassend Befehle, die an den Einsatz jedes der Schritte des Verfahrens nach einem der vorhergehenden Ansprüche angepasst sind, wenn das Programm auf einem Computer ausgeführt wird.

14. Vorrichtung, umfassend Mittel, die für den Einsatz jedes der Schritte des Verfahrens nach einem der Ansprüche 1 bis 12 angepasst sind.

## Claims

1. Method using a computer for the replication of at least one data item in the form of at least one fragment between a source system and at least one destination system, said source system and said at least one destination system being linked to each other by a communication link, this method, implemented in said source system, being **characterized in that** it comprises the following steps,
- calculating (215) a signature of said at least one fragment of said at least one data item to be replicated;
- transmitting (220), in a file, said signature to said at least one destination system; and,
- if, in response to said transmission step, a message is received (245) comprising, in a file, said signature and indicating that said at least one signature is unknown, transmitting (250) said at least one fragment to said at least one destination system such that said fragment is only transmitted to said at least one destination system if said signature is considered unknown.

2. Method according to claim 1, further comprising a step of transmitting an item of position and/or size information of said at least one fragment of said at least one data item to be replicated, said item of position and/or size information being transmitted with said signature.

3. Method according to claim 1 or claim 2, further comprising a step of storing said at least one fragment and said associated calculated signature.

4. Method according to any one of claims 1 to 3, further comprising a step of breaking down (210) said at least one data item to be replicated into a plurality of fragments comprising said at least one fragment.

5. Method according to any one of claims 1 to 4, further comprising a filtering step (205), said at least one data item to be replicated being obtained in response to said filtering step.

6. Method according to any one of claims 1 to 5, further comprising a step of determining an indication of origin of said at least one data item, said indication of origin being transmitted with said signature.

7. Method using a computer for the replication of at least one data item in the form of at least one fragment between a source system and at least one destination system, said source system and said at least one destination system being linked to each other by a communication link, this method, implemented in said at least one destination system, being **characterized in that** it comprises the following steps,
- receiving (225), in a file, at least one signature from said source system;
- if at least one signature was previously stored, said at least one previously stored signature being associated with a previously stored fragment, comparing (230) said at least one received signature with said at least one previously stored signature;
- if a signature of said at least one received signature was not previously stored,
∘ transmitting a message comprising, in a file, said signature and indicating that said signature is unknown, and
∘ receiving from said source system a fragment corresponding to said signature; and
- if a signature of said at least one received signature is identical to said at least one previously stored signature, reconstructing (265), at least partially, said at least one data item to be replicated, using a fragment associated with said at least one previously stored signature identical to said signature of said at least one received signature.

8. Method according to claim 7, further comprising, if a signature from said at least one received signature was not previously stored, the following steps:
- storing said received fragment and a corresponding signature;
- reconstructing (265), at least partially, said at least one data item to be replicated, using said at least one received fragment.

9. Method according to claim 8, further comprising a step of receiving at least one item of position and/or size information of a fragment corresponding to a signature of said at least one received signature, said item of position and/or size information being used for reconstructing, at least partially, said at least one data item to be replicated.

10. Method according to any one of claims 7 to 9, further comprising a step of calculating (260) a signature of said at least one received fragment.

11. Method according to any one of claims 7 to 10, according to which an indication of origin is received with said at least one signature, said at least one signature being compared only with previously stored signatures associated with an indication of origin identical to said received indication of origin.

12. Method according to any one of the previous claims, according to which a signature is obtained from a fragment by using a hash function.

13. Computer program comprising instructions for carrying out each of the steps of the method according to any one of the preceding claims when said program is executed on a computer.

14. Device comprising means for carrying out each of the steps of the method according to any one of claims 1 to 12.
